# EUROPÄISCHE PATENTSCHRIFT

(11) **EP 3 416 762 B1**
(45) Veröffentlichungstag und Bekanntmachung des Hinweises auf die Patenterteilung: **14.10.2020**
(21) Anmeldenummer: 17712691.9
(22) Anmeldetag: 14.02.2017
(51) Int. Cl.: B21D 5/02, B21D 37/14

(54) **ABKANTPRESSE UND VERFAHREN ZUM WECHSELN VON BIEGEWERKZEUGEN EINER ABKANTPRESSE**
PRESS BRAKE AND METHOD FOR CHANGING BENDING TOOLS OF A PRESS BRAKE
PRESSE PLIEUSE ET PROCÉDÉ POUR ÉCHANGER DES OUTILS DE PLIAGE D'UNE PRESSE PLIEUSE

(30) Priorität: 17.02.2016 AT 500982016
(43) Veröffentlichungstag der Anmeldung: 26.12.2018
(73) Patentinhaber: TRUMPF Maschinen Austria GmbH & Co. KG., 4061 Pasching (AT)
(72) Erfinder: DENKMEIER, Thomas, 4050 Traun (AT); SECIBOVIC, Kabir, 4623 Gunskirchen (AT)
(74) Vertreter: Burger, Hannes
(86) Internationale Anmeldenummer: PCT/AT2017/060026
(87) Internationale Veröffentlichungsnummer: WO 2017/139819

(56) Entgegenhaltungen:
- EP-A1- 1 658 908
- EP-A1- 2 865 458
- EP-A1- 2 946 846
- WO-A1-2016/109862
- WO-A1-2017/004648
- JP-A- 2003 211 223

## Beschreibung

Die Erfindung betrifft eine Abkantpresse zum Biegen von Blechen.

Aus der EP 2 364 789 B1 ist eine Abkantpresse bekannt, welche eine Werkzeugmanipulationsvorrichtung zum Herausnehmen von einzelnen Bierwerkzeugen aus einer Werkzeugaufnahme der Abkantpresse aufweist. Die Werkzeugmanipulationsvorrichtung weist einen Schlitten auf, welcher in einer zur Biegekante parallelen Richtung verschiebbar an der Abkantpresse gelagert ist. Am Schlitten sind drei Manipulationsarme angeordnet, welche zur Aufnahme von Biegewerkzeugen ausgebildet sind. Mittels der Manipulationsarme können einzelne Biegewerkzeuge aus der Werkzeugaufnahme des oberen Pressbalkens herausgenommen werden, um dadurch ein Verschieben der einzelnen Biegewerkzeuge in der Werkzeugaufnahme des oberen Pressbalkens zu ermöglichen.

Die in der EP 2 364 789 B1 beschriebene Abkantpresse weist den Nachlauf, dass die Werkzeugmanipulationsvorrichtung nur zur Aufnahme von drei Biegewerkzeugen ausgebildet ist und somit die Flexibilität der Werkzeugmanipulationsvorrichtung beschränkt ist.

Die EP 2 946 846 A1 und die JP 2003 211223 A offenbaren eine Abkantpresse zum Biegen von Blechen. Die Abkantpresse umfasst einen ersten feststehenden Pressbalken, sowie einen relativ zu diesem verschiebbaren zweiten Pressbalken; an den Pressbalken angeordnete bzw. ausgebildete Werkzeugaufnahmen zur Aufnahme von Biegewerkzeugen; einen Werkzeugspeicher zum Lagern von nicht in Verwendung befindlichen Biegewerkzeugen; eine Werkzeugwechselvorrichtung, welche zum Verschieben der Biegewerkzeuge zwischen der Werkzeugaufnahme und dem Werkzeugspeicher ausgebildet ist.

Aufgabe der vorliegenden Erfindung war es, die Nachteile des Standes der Technik zu überwinden und eine Vorrichtung und ein Verfahren zur Verfügung zu stellen, mittels derer der Werkzeugwechselvorgang möglichst schnell durchgeführt werden kann.

Diese Aufgabe wird durch eine Vorrichtung und ein Verfahren gemäß den Ansprüchen 1 und 8 gelöst.

Erfindungsgemäß ist eine Abkantpresse zum Biegen von Blechen ausgebildet. Die Abkantpresse umfasst einen ersten feststehenden Pressbalken, sowie einen relativ zu diesem verschiebbaren zweiten Pressbalken; an den Pressbalken angeordnete bzw. ausgebildete Werkzeugaufnahmen zur Aufnahme von Biegewerkzeugen; einen Werkzeugspeicher zum Lagern von nicht in Verwendung befindlichen Biegewerkzeugen; eine Werkzeugwechselvorrichtung, welche zum Verschieben der Biegewerkzeuge zwischen der Werkzeugaufnahme und dem Werkzeugspeicher ausgebildet ist. Der Werkzeugspeicher weist einen Vorrüstspeicher und einen Hauptspeicher auf, wobei der Vorrüstspeicher stirnseitig direkt an die Pressbalken anschließend angeordnet ist und der Hauptspeicher an den Vorrüstspeicher anschließend angeordnet ist, und wobei der Vorrüstspeicher und der Hauptspeicher jeweils zur Aufnahme von Biegewerkzeugen ausgebildet sind.

Die erfindungsgemäße Ausbildung der Abkantpresse weist den Vorteil auf, dass im Vorrüstspeicher die für den nächsten Biegevorgang benötigten Biegewerkzeuge vorbereitet und bereits sortenrein zueinander angeordnet werden können. Dieses Vorbereiten der Biegewerkzeuge kann während dem laufenden Betrieb der Abkantpresse durchgeführt werden, wodurch der Betrieb der Abkantpresse nicht eingeschränkt bzw. behindert wird. Der eigentliche Wechselvorgang der Biegewerkzeuge kann anschließend möglichst schnell und effizient durchgeführt werden, da die Biegewerkzeuge im Vorrüstspeicher bereits sortenrein eingelagert sind und nur mehr in die Werkzeugaufnahme der Abkantpresse hinein verschoben werden müssen. Der Hauptspeicher dient dazu, um eine größere Anzahl von Biegewerkzeugen im Werkzeugspeicher ablegen zu können, bzw. um die Biegewerkzeuge im Vorrüstspeicher sortieren zu können, sodass diese sortenrein im Vorrüstspeicher angeordnet werden können.

Weiters kann es zweckmäßig sein, wenn der Vorrüstspeicher zumindest zwei erste Speicherschienen zur Aufnahme eines Biegewerkzeuges aufweist, welche ersten Speicherschienen in Verlängerung zu der Werkzeugaufnahme des ersten Pressbalken positionierbar sind und zumindest zwei zweite Speicherschienen zur Aufnahme eines Biegewerkzeuges aufweist, welche zweite Speicherschienen in Verlängerung zu der Werkzeugaufnahme des zweiten Pressbalken positionierbar sind, und wobei der Hauptspeicher zumindest zwei erste Speicherschienen zur Aufnahme eines Biegewerkzeuges aufweist, welche ersten Speicherschienen des Hauptspeichers in Verlängerung zu den ersten Speicherschienen des Vorrüstspeichers bringbar sind und wobei der Hauptspeicher zumindest zwei zweite Speicherschienen zur Aufnahme eines Biegewerkzeuges aufweist, welche zweiten Speicherschienen des Hauptspeichers in Verlängerung zu den zweiten Speicherschienen des Vorrüstspeichers bringbar sind. Von Vorteil ist hierbei, dass dem ersten Pressbalken bzw. dem zweiten Pressbalken zugehörig im Vorrüstspeicher und im Hauptspeicher jeweils zwei Speicherschienen ausgebildet sind, sodass die Biegewerkzeuge von der Werkzeugaufnahme in den Vorrüstspeicher bzw. von diesem in den Hauptspeicher verschoben werden können, wobei durch das Vorhandensein von zumindest zwei Speicherschienen erreicht werden kann, dass eine Speicherschiene die aus der Werkzeugaufnahme herausgenommenen Biegewerkzeuge aufnehmen kann und die zweite Speicherschiene die zur Bestückung der Werkzeugaufnahme vorbereiteten Biegewerkzeuge aufnehmen kann.

Ferner kann vorgesehen sein, dass die ersten Speicherschienen des Vorrüstspeichers an einer ersten Vorrüstspeicherschienenmanipulationsvorrichtung angeordnet sind und dass die zweiten Speicherschienen des Vorrüstspeichers an einer zweiten Vorrüstspeicherschienenmanipulationsvorrichtung angeordnet sind und dass die ersten Speicherschienen des Hauptspeichers an einer ersten Hauptspeicherschienenmanipulationsvorrichtung angeordnet sind und dass die zweiten Speicherschienen des Hauptspeichers an einer zweiten Hauptspeicherschienenmanipulationsvorrichtung angeordnet sind. Von Vorteil ist hierbei, dass die Speicherschienen mittels der Schienenmanipulationsvorrichtungen bewegt werden können und somit verschiedenste Speicherschienen des Vorrüstspeichers mit der Werkzeugaufnahme ausgerichtet werden können. Darüber hinaus können durch diese Maßnahme verschiedenste Speicherschienen des Vorrüstspeichers mit verschiedensten Speicherschienen des Hauptspeichers zueinander ausgerichtet werden. Insbesondere kann dadurch erreicht werden, dass die einzelnen Speicherschienen bzw. der Werkzeugspeicher so zueinander ausgerichtet werden können, dass ein problemloses verschieben der Biegewerkzeuge zwischen diesen ermöglicht wird.

Darüber hinaus kann vorgesehen sein, dass die einzelnen Schienenmanipulationsvorrichtungen als Paternoster ausgebildet sind, wobei zwei zueinander beabstandete umlaufende Zugmittel ausgebildet sind und die einzelnen Speicherschienen jeweils an ihren Längsenden mit den Zugmitteln gekoppelt sind. Von Vorteil ist hierbei, dass die Speicherschienen durch eine Umlaufende Paternosteranordnung möglichst einfach und kostengünstig bewegt werden können, und darüber hinaus der Platzbedarf für diese Anordnung die Speicherschienen möglichst gering gehalten werden kann.

Vorteilhaft ist auch eine Ausprägung, gemäß welcher vorgesehen sein kann, dass die einzelnen Speicherschienen mittels einer Gelenkverbindung mit den Zugmitteln gekoppelt sind, und die Speicherschienen derart an die Zugmittel gekoppelt sind, dass die Speicherschienen bezüglich deren Oberseite und Unterseite aufgrund der Schwerkraft immer gleich ausgerichtet bleiben. Von Vorteil ist hierbei, dass die Speicherschienen an allen Positionen im Umlauf gleich ausgerichtet bleiben. Dadurch kann vermieden werden, dass die in der Speicherschiene aufgenommen Biegewerkzeuge während des Umlauf der Speicherschiene im Paternostersystem aus der Speicherschiene herausfallen können.

Gemäß einer Weiterbildung ist es möglich, dass die Werkzeugwechselvorrichtung einen Manipulationskopf umfasst, welcher zur wahlweisen Kopplung mit einem der Biegewerkzeuge ausgebildet ist, um dieses in horizontaler Verschieberichtung entlang der Werkzeugaufnahme verschieben zu können. Von Vorteil ist hierbei, dass das Biegewerkzeug mit dem Manipulationskopf derart gekoppelt werden kann, dass ein Verschieben des Biegewerkzeuges mittels dem Manipulationskopf möglich ist.

Ferner kann es zweckmäßig sein, wenn der Manipulationskopf einen Mitnehmerdorn aufweist, welcher zum Eingriff in ein Biegewerkzeug ausgebildet ist, wobei das Biegewerkzeug eine Ausnehmung aufweist, in welche der Mitnehmerdorn einschiebbar ist, und dass der Mitnehmerdorn mit einem Aktor gekoppelt ist, mittels welchem Aktor der Mitnehmerdorn in die Ausnehmung des Biegewerkzeuges einschiebbar ist. Von Vorteil ist hierbei, dass mittels dem Mitnehmerdorn eine möglichst gute Verbindung zwischen dem Manipulationskopf und dem Biegewerkzeug hergestellt werden kann, sodass das Biegewerkzeug vom Manipulationskopf verschoben werden kann.

Darüber hinaus kann vorgesehen sein, dass der Manipulationskopf seitlich der Werkzeugaufnahmen angeordnet ist und mittels einer Führungsschiene in horizontaler Verschieberichtung entlang der Werkzeugaufnahme verschiebbar gelagert ist, wobei sich die Führungsschiene von der Werkzeugaufnahme bis zumindest in den Vorrüstspeicher des Werkzeugspeichers erstreckt. Von Vorteil ist hierbei, dass durch diese Maßnahme der Manipulationskopf bzw. die komplette Werkzeugwechselvorrichtung dem Betrieb der Abkantpresse nicht im Wege steht.

Weiters kann vorgesehen sein, dass sich die Führungsschiene über die gesamte Länge der Werkzeugaufnahmen und sowohl über den Vorrüstspeicher als auch den Hauptspeicher des Werkzeugspeichers erstreckt. Von Vorteil ist hierbei, dass die Biegewerkzeuge mit nur einem Manipulationskopf auf der gesamten Länge der Werkzeugaufnahme bzw. des Werkzeugspeichers verschoben werden können.

Weiters kann bei einem Verfahren zum Wechseln von Biegewerkzeugen an einer Abkantpresse vorgesehen sein, dass das Verfahren die folgenden Verfahrensschritte umfasst:
- Vorbereiten eines Wechsels der Biegewerkzeuge, wobei die für den nächsten Biegevorgang benötigten Biegewerkzeuge in der benötigten Reihenfolge mittels einer Werkzeugwechselvorrichtung von einer Speicherschiene eines Hauptspeichers eines Werkzeugspeichers in eine Speicherschiene eines Vorrüstspeichers des Werkzeugspeichers verschoben werden;
- Durchführen des Werkzeugwechsels, wobei Biegewerkzeuge, welche in einer an Pressbalken angeordneten Werkzeugaufnahme aufgenommen sind, mittels der Werkzeugwechselvorrichtung von der Werkzeugaufnahme in eine der freien Speicherschienen des Vorrüstspeichers verschoben werden und wobei die in der Speicherschiene des Vorrüstspeichers vorbereiteten Biegewerkzeuge mittels der Werkzeugwechselvorrichtung von der Speicherschiene des Vorrüstspeichers in die Werkzeugaufnahme verschoben werden;
- Nachbereiten des Werkzeugwechsels, wobei die aus der Werkzeugaufnahme in die Speicherschiene des Vorrüstspeichers verschobenen Biegewerkzeuge optional von der Speicherschiene des Vorrüstspeichers in die Speicherschiene des Hauptspeichers verschoben werden.

Von Vorteil am erfindungsgemäßen Verfahren zum Wechsel von Biegewerkzeugen an einer Abkantpresse ist, dass der Wechselvorgang zum Wechsel der Biegewerkzeuge noch während dem Betrieb der Biegemaschine vorbereitet wird. Beim eigentlichen Wechselvorgang der Biegewerkzeuge sind diese bereits in der richtigen Reihenfolge sortiert und können somit möglichst einfach und schnell zwischen Werkzeugspeicher und Speicherschiene gewechselt werden.

Zum besseren Verständnis der Erfindung wird diese anhand der nachfolgenden Figuren näher erläutert.

Es zeigen jeweils in stark vereinfachter, schematischer Darstellung:
- Fig. 1: eine Seitenansicht eines Ausführungsbeispiels einer Bearbeitungsanlage ohne Darstellung des Werkzeugspeichers;
- Fig. 2: eine Vorderansicht eines Ausführungsbeispiels einer Bearbeitungsanlage;
- Fig. 3: eine perspektivische Ansicht eines Ausführungsbeispiels einer Bearbeitungsanlage;
- Fig. 4: eine schematische Schnittdarstellung eines Ausführungsbeispiels einer Werkzeugaufnahme.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

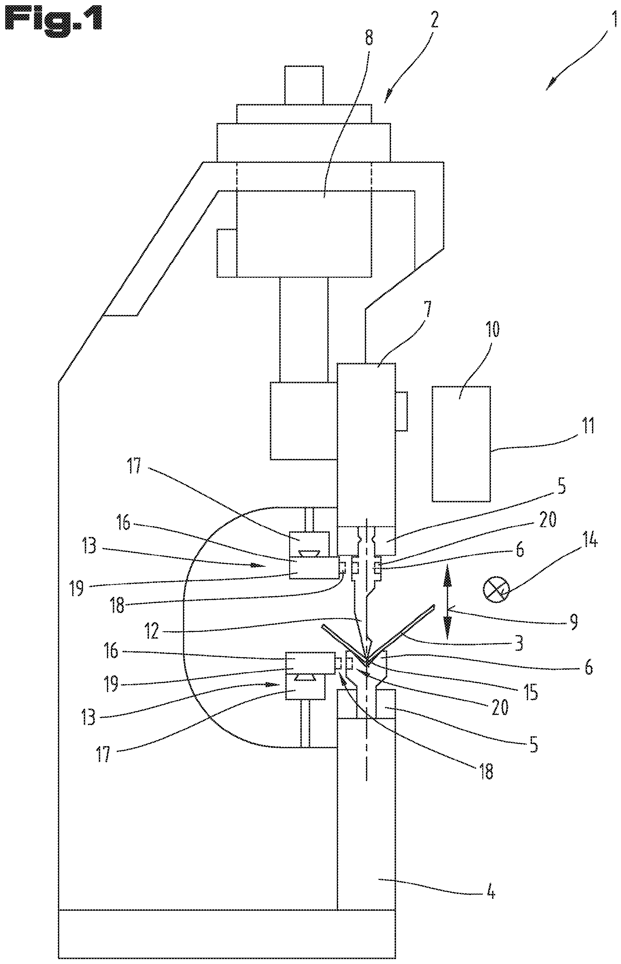

Fig. 1 zeigt in schematischer Darstellung die Seitenansicht einer Bearbeitungsanlage 1. Die Bearbeitungsanlage 1 umfasst eine Abkantpresse 2, welche zum Biegen eines Bleches 3 vorgesehen ist.

Die Abkantpresse 2 umfasst einen ersten feststehenden Pressbalken 4, in welchem eine Werkzeugaufnahme 5 zur Aufnahme eines Biegewerkzeuges 6 ausgebildet ist. Weiters umfasst die Abkantpresse 2 einen zweiten verstellbaren Pressbalken 7 an welchem ebenfalls eine Werkzeugaufnahme 5 zur Aufnahme eines der Biegewerkzeuge 6 ausgebildet ist.

Das zu biegende Blech 3 wird für den Biegevorgang zwischen den Biegewerkzeugen 6 des ersten 4 und des zweiten Pressbalken 7 eingelegt. Das im zweiten Pressbalken 7 befestigte Biegewerkzeug 6 respektive der zweite Pressbalken 7 wird durch eine Pressenantriebseinheit 8 in vertikaler Richtung 9 nach oben bzw. nach unten bewegt. Zur Steuerung der Pressenantriebseinheit 8 ist eine Rechnereinheit 10 vorgesehen, welche an eine Eingabe- und/oder Anzeigeeinheit 11 gekoppelt sein kann.

Aus Fig. 1 ist weiters ersichtlich, dass das Biegewerkzeug 6 einen Werkzeugkörper 12 aufweist, welcher beim Biegevorgang das zu biegende Blech 3 verformt. Das Biegewerkzeug 6 kann mittels einer Werkzeugwechselvorrichtung 13 in der Werkzeugaufnahme 5 in horizontaler Verschieberichtung 14 entlang des Klemmabschnittes der Werkzeugaufnahme 5 positioniert werden.

In der Werkzeugaufnahme 5 können mehrere Biegewerkzeuge 6, welche gleichartig ausgebildet sind, nebeneinander positioniert werden und aneinander anschließen. Dadurch kann erreicht werden, dass Biegekanten 15 von einzelnen Biegewerkzeugen 6 eine entsprechend lange Bearbeitungskante bilden.

Werden Biegewerkzeuge 6 unterschiedlicher Art für unterschiedliche Arbeitsschritte verwendet, so können die Biegewerkzeuge 6 in Gruppen angeordnet sein, wobei die einzelnen Gruppen der Biegewerkzeuge 6 in einem gewissen Abstand zueinander angeordnet sind.

Um eine möglichst flexible Bearbeitungsanlage 1 zur Verfügung zu stellen, ist es notwendig, dass die Biegewerkzeuge 6 einfach und schnell in der Werkzeugaufnahme 5 gespannt und aus dieser wieder herausgenommen werden können.

Wie aus Fig. 1 ersichtlich kann vorgesehen sein, dass die Werkzeugwechselvorrichtung 13 einen Manipulationskopf 16 umfasst, welcher an einer Führungsschiene 17 gelagert ist und somit in horizontaler Verschieberichtung 14 verschiebbar ist. In einer bevorzugten Ausführungsvariante kann vorgesehen sein, dass zwei Manipulationsköpfe 16 ausgebildet sind, welche jeweils an einer Führungsschiene 17 gelagert sind, wobei einer der beiden Manipulationsköpfe 16 dem ersten Pressbalken 4 zugeordnet ist und der zweite der beiden Manipulationsköpfe 16 dem zweiten Pressbalken 7 zugeordnet ist.

Der Manipulationskopf 16 ist dazu ausgebildet, um mit dem Biegewerkzeug 6 gekoppelt zu werden, um dieses in horizontaler Verschieberichtung 14 verschieben zu können. Zur Koppelung zwischen Manipulationskopf 16 und Biegewerkzeug 6 können verschiedenste kraftschlüssige oder formschlüssige Verbindungen vorgesehen sein.

In einer Ausführungsvariante kann vorgesehen sein, dass der Manipulationskopf 16 einen Mitnehmerdorn 18 oder auch Mitnehmerzapfen aufweist, welcher mittels einem Aktor 19 bewegt werden kann und dadurch mit einer im Biegewerkzeug 6 ausgebildeten Ausnehmung 20 in Eingriff gebracht werden kann.

Die Führungsschiene 17 kann sich zumindest über die gesamte Länge 21 der Werkzeugaufnahmen 5 erstrecken.

In einer bevorzugten Ausführungsvariante kann vorgesehen sein, dass die Führungsschiene 17 bzw. der Manipulationskopf 16 an einer Innenseite 22 des ersten Pressbalken 4 bzw. des zweiten Pressbalken 7 angeordnet sind.

Weitere Ausführungsdetails bzw. Ausführungsvarianten zum Manipulationskopf 16 werden in der Figurenbeschreibung noch genannt.

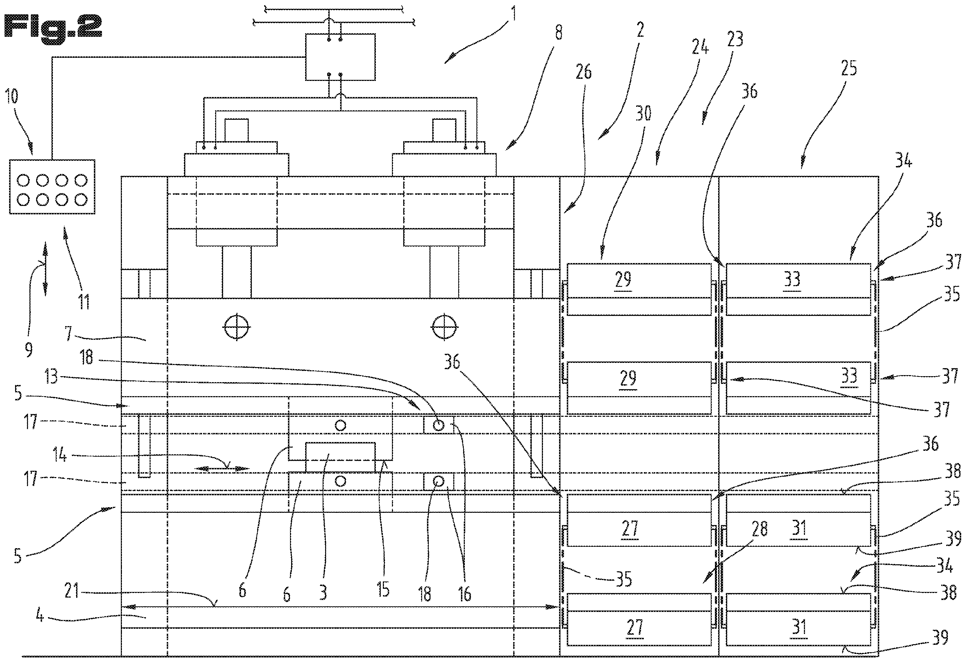

In der Fig. 2 ist eine weitere und gegebenenfalls für sich eigenständige Ausführungsform der Bearbeitungsanlage 1 in einer schematischen Ansicht von vorne gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

Die weitere Figurenbeschreibung wird anhand einer Zusammenschau der Figuren 1 und 2 beschrieben.

Wie besonders gut in Fig. 2 ersichtlich, kann vorgesehen sein, dass der Manipulationskopf 16 in horizontaler Verschieberichtung 14 relativ zur Werkzeugaufnahme 5 verschiebbar an der Führungsschiene 17 gelagert ist. In einem ersten Ausführungsbeispiel kann die Verbindung zwischen Führungsschiene 17 und Manipulationskopf 16 mittels einer formschlüssigen Gleitführung, wie etwa einer Schwalbenschwanzführung realisiert werden. In einer weiteren Ausführungsvariante kann vorgesehen sein, dass der Manipulationskopf 16 mittels einer Linear-Wälzlagerführung, wie etwa einer Kugelumlaufführung mit der Führungsschiene 17 gekoppelt ist.

Zum Verschieben des Manipulationskopfes 16 kann vorgesehen sein, dass dieser beispielsweise mit einer Antriebseinheit gekoppelt ist. Die Antriebseinheit kann beispielsweise ein Zugmittel, wie etwa ein Seil oder einen Zahnriemen umfassen. Das Zugmittel kann mit einem Antriebsmotor gekoppelt sein, welcher beispielsweise an einem Ende der Führungsschiene 17 angeordnet sein kann.

In einer weiteren Ausführungsvariante kann vorgesehen sein, dass zum Verschieben des Manipulationskopfes 16 an diesem ein Positioniermotor angeordnet ist, welcher mit einem Zahnrad gekoppelt ist. Das Zahnrad kann in eine Zahnstange eingreifen, wodurch der Manipulationskopf 16 in horizontaler Verschieberichtung 14 positioniert werden kann.

In einer weiteren nicht dargestellten Ausführungsvariante kann vorgesehen sein, dass die Werkzeugwechselvorrichtung 13 beispielsweise durch eine Hinteranschlageinheit gebildet wird. Insbesondere kann hierbei vorgesehen sein, dass der Manipulationskopf 16 auch eine Anschlagfläche aufweist, um als Hinteranschlag wirken zu können.

Wie aus Figur 2 weiters ersichtlich ist vorgesehen, dass die Abkantpresse 2 einen Werkzeugspeicher 23 aufweist, wobei der Werkzeugspeicher 23 einen Vorrüstspeicher 24 und einen Hauptspeicher 25 umfasst. Der Werkzeugspeicher 23 ist aus Gründen der Übersichtlichkeit in Fig. 1 nicht dargestellt.

Vorzugsweise ist vorgesehen, dass der Vorrüstspeicher 24 an einer Stirnseite 26 der Pressbalken 4, 7 angeordnet ist. Mit anderen Worten ausgedrückt, ist der Vorrüstspeicher 24 direkt neben der Presseinheit der Abkantpresse 2 aufgestellt. Der Hauptspeicher 25 schließt vorzugsweise direkt an den Vorrüstspeicher 24 an, wobei der Vorrüstspeicher 24 und der Hauptspeicher 25 eine Einheit bilden können.

Der Vorrüstspeicher 24 bzw. der Hauptspeicher 25 sind zur Aufnahme von Biegewerkzeugen 6 ausgebildet, welche im aktuellen Biegevorgang gerade nicht benötigt werden. Zur Aufnahme der Biegewerkzeuge 6 im Vorrüstspeicher 24 bzw. im Hauptspeicher 25 ist vorgesehen, dass diese Aufnahmeschienen aufweisen, in welche die Biegewerkzeuge 6 eingeschoben werden können.

Insbesondere kann vorgesehen sein, dass der Vorrüstspeicher 24 zumindest zwei erste Speicherschienen 27 aufweist, welche in Verlängerung zu der Werkzeugaufnahme 5 des ersten Pressbalkens 4 positionierbar sind. Insbesondere kann vorgesehen sein, dass eine erste Schienenmanipulationsvorrichtung 28 ausgebildet ist, mittels welchen die zumindest zwei ersten Speicherschienen 27 wahlweise in Verlängerung zur Werkzeugaufnahme 5 des ersten Pressbalken 4 verschoben werden können. Somit können die Biegewerkzeuge 6 mittels dem Manipulationskopf 16 wahlweise zwischen der Werkzeugaufnahme 5 und der ersten Speicherschiene 27 verschoben werden. Durch einen Wechsel zwischen den einzelnen ersten Speicherschienen 27 können die Biegewerkzeuge 6 wahlweise in eine der beiden ersten Speicherschienen 27 eingesetzt bzw. aus dieser herausgenommen werden.

Weiters kann vorgesehen sein, dass analog zu den ersten Speicherschienen 27 im Vorrüstspeicher 24 zumindest zwei zweite Speicherschienen 29 ausgebildet sind, welche in Verlängerung zu der Werkzeugaufnahme 5 des zweiten Pressbalken 7 positionierbar ist. Darüber hinaus kann eine zweite Schienenmanipulationsvorrichtung 30 vorgesehen sein, mittels welcher die zweiten Speicherschienen 29 positionierbar sind.

Analog zum Aufbau des Vorrüstspeichers 24 kann der Hauptspeicher 25 ebenfalls zumindest zwei erste Speicherschienen 31 aufweisen, welche in Verlängerung zu einer der ersten Speicherschienen 27 des Vorrüstspeichers 24 positionierbar sind. Die ersten Speicherschienen 31 des Hauptspeichers 25 können dabei mittels einer ersten Schienenmanipulationsvorrichtung 32 des Hauptspeichers 25 positioniert werden. Darüber hinaus kann eine zweite Speicherschiene 33 des Hauptspeichers 25 vorgesehen sein, welche von einer zweiten Schienenmanipulationsvorrichtung 34 positioniert werden kann. Durch die beschriebene Kombination aus Vorrüstspeicher 24 und Hauptspeicher 25 kann erreicht werden, dass Biegewerkzeuge in den Speicherschienen 31, 33 des Hauptspeichers 25 gelagert werden und dass die Biegewerkzeuge 6 noch während der Hauptarbeitszeit der Abkantpresse 2 vom Hauptspeicher 25 in den Vorrüstspeicher 24 verschoben werden und in diesem in der geforderten Reihenfolge zum Transfer in die Werkzeugaufnahme 5 vorbereitet werden. Wie aus Fig. 2 ersichtlich, kann vorgesehen sein, dass die Schienenmanipulationsvorrichtungen 28, 30 des Vorrüstspeichers 24 bzw. die Schienenmanipulationsvorrichtungen 32, 34 des Hauptspeichers 25 als Paternoster ausgebildet sind, wobei pro Schienenmanipulationsvorrichtung 28, 30, 32, 34 jeweils zwei Zugmittel 35 vorgesehen sind, an welchen die Speicherschienen 27, 29, 31, 33 befestigt sind. Insbesondere kann vorgesehen sein, dass jeweils ein Längsende 36 einer Speicherschiene 27, 29, 31, 33 mittels einer Gelenkverbindung 37 mit einem der beiden Zugmittel 35 verbunden ist. Durch die Gelenkverbindung 37 kann erreicht werden, dass bedingt durch die Schwerkraft die einzelnen Speicherschienen 27, 29, 31, 33 in jeder Position bezüglich deren Oberseite 38 und deren Unterseite 39 gleich ausgerichtet bleiben.

Das Zugmittel 35 kann in einem ersten Ausführungsbeispiel in Form einer Gliederkette ausgebildet sein, welche an Umlenkstationen umgelenkt wird. In einem weiteren Ausführungsbeispiel kann das Zugmittel 35 beispielsweise durch ein Seil gebildet sein. In wieder einem anderen Ausführungsbeispiel kann das Zugmittel 35 beispielsweise als Zahnriemen ausgebildet sein.

Wie besonders gut aus Fig. 2 ersichtlich, ist zum Werkzeugwechsel vorgesehen, dass die erste Speicherschiene 27 des Vorrüstspeichers 24 zur Werkzeugaufnahme 5 des ersten Pressbalken 4 ausgerichtet ist, sodass die Biegewerkzeuge 6 zwischen Werkzeugaufnahme 5 und erster Speicherschiene 27 mittels der Werkzeugwechselvorrichtung 13 verschoben werden können. Dazu muss vorgesehen sein, dass die Führungsschiene 17 der Werkzeugwechselvorrichtung 13 sich nicht nur über die Länge 21 der Werkzeugaufnahmen 5 erstreckt, sondern dass sich die Führungsschiene 17 zumindest auch über den Vorrüstspeicher 24 erstreckt.

In einer bevorzugten Ausführungsvariante ist vorgesehen, dass die Führungsschiene 17 sich sowohl über die Länge 21 der Werkzeugaufnahmen 5 als auch über den Vorrüstspeicher 24 und den Hauptspeicher 25 erstreckt, sodass die Biegewerkzeuge 6 mittels der Werkzeugwechselvorrichtung 13 zwischen Werkzeugaufnahme 5, Vorrüstspeicher 24 und Hauptspeicher 25 verschoben werden können.

In einer alternativen Ausführungsvariante kann vorgesehen sein, dass anstatt einer durchgehenden Führungsschiene 17 zwei Führungsschienen 17 vorgesehen sind, wobei sich eine erste Führungsschiene 17 zwischen Werkzeugaufnahme 5 und Vorrüstspeicher 24 erstreckt und eine zweite Führungsschiene 17 zwischen Vorrüstspeicher 24 und Hauptspeicher 25 erstreckt. Bei einem derartigen System wird je Führungsschiene ein Manipulationskopf 16 benötigt.

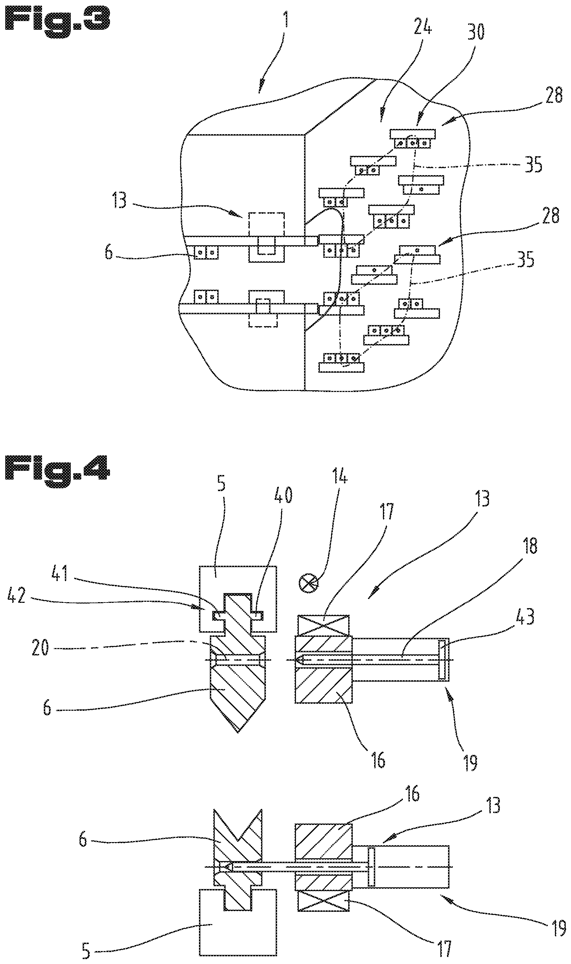

In der Fig. 3 ist eine weitere und gegebenenfalls für sich eigenständige Ausführungsform der Bearbeitungsanlage 1 gezeigt, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Fig. 3 zeigt in einer schematischen Darstellung eine perspektivische Ansicht der Bearbeitungsanlage 1. In Fig. 3 ist das Paternoster-System der ersten Schienenmanipulationsvorrichtung 28 bzw. zweiten Schienenmanipulationsvorrichtung 30 des Vorrüstspeichers 24 gut ersichtlich. Der Hauptspeicher 25 ist aus Gründen der Übersichtlichkeit in der Fig. 3 nicht dargestellt.

In der Fig. 4 ist eine weitere und gegebenenfalls für sich eigenständige Ausführungsform der Bearbeitungsanlage 1 gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Fig. 4 zeigt einen exemplarischen Schnitt durch die Werkzeugaufnahmen 5 der Abkantpresse 2. Wie aus Fig. 4 ersichtlich, kann vorgesehen sein, dass das Biegewerkzeug 6, welches in der Werkzeugaufnahme 5 des zweiten Pressbalken 7 gespannt ist, einen Aufnahmekopf 40 aufweist, welcher formschlüssig in der Werkzeugaufnahme 5 aufgenommen ist und dadurch ein vertikales Herausfallen des Biegewerkzeuges 6 vermieden wird. Durch die dargestellte Ausgestaltung des Aufnahmekopfes 40 mit seitlich vorstehenden Halteabschnitten 41, welche mit einer Ausnehmung 42 in der Werkzeugaufnahme 5 korrespondieren, kann erreicht werden, dass das Biegewerkzeug 6 in horizontaler Verschieberichtung 14 in der Werkzeugaufnahme 5 verschoben werden kann.

Wie aus Fig. 4 weiters ersichtlich, kann vorgesehen sein, dass die Ausnehmung 20 in den Biegewerkzeugen 6 in Form einer Durchgangsbohrung ausgeführt ist, in welche der Mitnehmerdorn 18 eingeschoben werden kann.

Unabhängig von der Ausbildung des Mitnehmerdornes 18 kann vorgesehen sein, dass der Aktor 19 als Pneumatikzylinder ausgebildet ist und daher einen Kolben 43 aufweist. Der Mitnehmerdorn 18 wirkt hierbei als Zylinderstange.

In einer alternativen Ausführungsform kann beispielsweise vorgesehen sein, dass anstatt eines Mitnehmerdornes 18 ein sonstiges Koppelmittel vorgesehen ist, mittels welchem der Manipulationskopf 16 mit dem Biegewerkzeug 6 gekoppelt werden kann, sodass das Biegewerkzeug verschoben werden kann.

Anhand der Fig. 2 wird das Verfahren zum Wechseln von Biegewerkzeugen 6 an der Abkantpresse 2 beschrieben. Das Verfahren umfasst die folgenden Verfahrensschritte:
- Vorbereiten eines Wechsels der Biegewerkzeuge 6, wobei die für den nächsten Biegevorgang benötigten Biegewerkzeuge 6 in der benötigten Reihenfolge mittels einer Werkzeugwechselvorrichtung 13 von einer Speicherschiene 31, 33 eines Hauptspeichers 25 eines Werkzeugspeichers 23 in eine Speicherschiene 27, 29 eines Vorrüstspeichers 24 des Werkzeugspeichers 23 verschoben werden. Insbesondere müssen zum Durchführen dieses Verfahrensschrittes die Speicherschiene 31, 33 des Hauptspeichers 25 und die Speicherschiene 27, 29 des Vorrüstspeichers 24 zueinander ausgerichtet werden, sodass ein Verschieben der Biegewerkzeuge 6 zwischen den einzelnen Speicherschienen 31, 33, 27, 29 ermöglicht wird. Natürlich werden jeweils die ersten Speicherschienen 31, 27 und die zweiten Speicherschienen 33, 29 zueinander ausgerichtet. Dadurch wird ermöglicht, dass die Biegewerkzeuge 6 in gewünschter Reihenfolge im Vorrüstspeicher 24 positioniert werden.
- Durchführen des Werkzeugwechsels, wobei Biegewerkzeuge 6, welche in einer an Pressbalken 4, 7 angeordneten Werkzeugaufnahme 5 aufgenommen sind, mittels einer Werkzeugwechselvorrichtung 13 von der Werkzeugaufnahme 5 in eine der freien Speicherschienen 27, 29 des Vorrüstspeichers 24 verschoben werden. Anschließend wird die nun mit Biegewerkzeugen 6 befüllte Speicherschiene 27, 29 des Vorrüstspeichers 24 mittels der ersten Schienenmanipulationsvorrichtung 28 bzw. der zweiten Schienenmanipulationsvorrichtung 30 des Vorrüstspeichers 24 von der Werkzeugaufnahme 5 weg bewegt und die mit Biegewerkzeugen 6 für den nächsten Biegevorgang vorbereitete Speicherschiene 27, 29 in Position gebracht. Anschließend werden die in der Speicherschiene 27, 29 des Vorrüstspeichers 24 vorbereiteten Biegewerkzeuge 6 mittels der Werkzeugwechselvorrichtung 13 von der Speicherschiene 27, 29 des Vorrüstspeichers 24 in die Werkzeugaufnahme 5 verschoben.
- Nachbereiten des Werkzeugwechsels, wobei die aus der Werkzeugaufnahme 5 in die Speicherschiene 27, 29 des Vorrüstspeichers 24 verschobenen Biegewerkzeuge 6 optional von der Speicherschiene 27, 29 des Vorrüstspeichers 24 in eine der Speicherschienen 31, 33 des Hauptspeichers 25 verschoben werden. Darüber hinaus kann durch ein Verschieben der Biegewerkzeuge 6 zwischen Vorrüstspeicher 24 und Hauptspeicher 25 erreicht werden, dass die Biegewerkzeuge 6 im Vorrüstspeicher 24 entsprechend den weiteren Einsatzbedingungen geordnet werden können.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8, 1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Bearbeitungsanlage | 29 | zweite Speicherschiene Vorrüstspeicher |
| 2 | Abkantpresse | | |
| 3 | Blech | 30 | zweite Schienenmanipulationsvorrichtung Vorrüstspeicher |
| 4 | erster Pressbalken | | |
| 5 | Werkzeugaufnahme | 31 | erste Speicherschiene Hauptspeicher |
| 6 | Biegewerkzeug | | |
| 7 | zweiter Pressbalken | 32 | erste Schienenmanipulationsvorrichtung Hauptspeicher |
| 8 | Pressenantriebseinheit | | |
| 9 | vertikale Richtung | 33 | zweite Speicherschiene Hauptspeicher |
| 10 | Rechnereinheit | | |
| 11 | Eingabe- Anzeigeeinheit | 34 | zweite Schienenmanipulationsvorrichtung Hauptspeicher |
| 12 | Werkzeugkörper | | |
| 13 | Werkzeugwechselvorrichtung | 35 | Zugmittel |
| 14 | horizontale Verschieberichtung | 36 | Längsende Speicherschiene |
| 15 | Biegekante | 37 | Gelenkverbindung |
| 16 | Manipulationskopf | 38 | Oberseite Speicherschiene |
| 17 | Führungsschiene | 39 | Unterseite Speicherschiene |
| 18 | Mitnehmerdorn | 40 | Aufnahmekopf Biegewerkzeug |
| 19 | Aktor | 41 | Halteabschnitt |
| 20 | Ausnehmung | 42 | Ausnehmung |
| 21 | Länge der Werkzeugaufnahmen | 43 | Kolben |
| 22 | Innenseite erster Pressbalken | | |
| 23 | Werkzeugspeicher | | |
| 24 | Vorrüstspeicher | | |
| 25 | Hauptspeicher | | |
| 26 | Stirnseite | | |
| 27 | erste Speicherschiene Vorrüstspeicher | | |
| 28 | erste Schienenmanipulationsvorrichtung Vorrüstspeicher | | |

## Patentansprüche

1. Abkantpresse (2) zum Biegen von Blechen (3), die Abkantpresse (2) umfassend:
einen ersten feststehenden Pressbalken (4), sowie einen relativ zu diesem verschiebbaren zweiten Pressbalken (7);
an den Pressbalken (4, 7) angeordnete bzw. ausgebildete Werkzeugaufnahmen (5) zur Aufnahme von Biegewerkzeugen (6);
einen Werkzeugspeicher (23) zum Lagern von nicht in Verwendung befindlichen Biegewerkzeugen (6);
eine Werkzeugwechselvorrichtung (13), welche zum Verschieben der Biegewerkzeuge (6) zwischen der Werkzeugaufnahme (5) und dem Werkzeugspeicher (23) ausgebildet ist,
wobei
der Werkzeugspeicher (23) einen Vorrüstspeicher (24) und einen Hauptspeicher (25) aufweist, wobei der Vorrüstspeicher (24) an einer Stirnseite (26) der Pressbalken (4, 7) direkt an diese anschließend angeordnet ist und der Hauptspeicher (25) an den Vorrüstspeicher (24) anschließend angeordnet ist, und wobei der Vorrüstspeicher (24) und der Hauptspeicher (25) jeweils zur Aufnahme von Biegewerkzeugen (6) ausgebildet sind, wobei die Werkzeugwechselvorrichtung (13) einen Manipulationskopf (16) umfasst, welcher zur wahlweisen Kopplung mit einem der Biegewerkzeuge (6) ausgebildet ist, um dieses in horizontaler Verschieberichtung (14) entlang der Werkzeugaufhahme (5) verschieben zu können, **dadurch gekennzeichnet, dass** der Manipulationskopf (16) einen Mitnehmerdorn (18) aufweist, welcher zum Eingriff in eines der Biegewerkzeuge (6) ausgebildet ist, wobei das Biegewerkzeug (6) eine Ausnehmung (20) aufweist, in welche der Mitnehmerdorn (18) einschiebbar ist, und dass der Mitnehmerdorn (18) mit einem Aktor (19) gekoppelt ist, mittels welchem Aktor (19) der Mitnehmerdorn (18) in die Ausnehmung (20) des Biegewerkzeuges (6) einschiebbar ist.

2. Abkantpresse nach Anspruch 1, **dadurch gekennzeichnet, dass** der Vorrüstspeicher (24) zumindest zwei erste Speicherschienen (27) zur Aufnahme eines Biegewerkzeuges (6) aufweist, welche ersten Speicherschienen (27) in Verlängerung zu der Werkzeugaufnahme (5) des ersten Pressbalken (4) positionierbar sind und zumindest zwei zweite Speicherschienen (29) zur Aufnahme eines Biegewerkzeuges (6) aufweist, welche zweite Speicherschienen (29) in Verlängerung zu der Werkzeugaufnahme (5) des zweiten Pressbalken (7) positionierbar sind, und wobei der Hauptspeicher (25) zumindest zwei erste Speicherschienen (31) zur Aufnahme eines Biegewerkzeuges (6) aufweist, welche ersten Speicherschienen (31) des Hauptspeichers (25) in Verlängerung zu den ersten Speicherschienen (27) des Vorrüstspeichers (24) bringbar sind und wobei der Hauptspeicher (25) zumindest zwei zweite Speicherschienen (33) zur Aufnahme eines Biegewerkzeuges (6) aufweist, welche zweiten Speicherschienen (33) des Hauptspeichers (25) in Verlängerung zu den zweiten Speicherschienen (29) des Vorrüstspeichers (24) bringbar sind.

3. Abkantpresse nach Anspruch 2, **dadurch gekennzeichnet, dass** die ersten Speicherschienen (27) des Vorrüstspeichers (24) an einer ersten Schienenmanipulationsvorrichtung (28) angeordnet sind und dass die zweiten Speicherschienen (29) des Vorrüstspeichers (24) an einer zweiten Schienenmanipulationsvorrichtung (30) angeordnet sind und dass die ersten Speicherschienen (31) des Hauptspeichers (25) an einer ersten Schienenmanipulationsvorrichtung (32) angeordnet sind und dass die zweiten Speicherschienen (33) des Hauptspeichers (25) an einer zweiten Schienenmanipulationsvorrichtung (34) angeordnet sind.

4. Abkantpresse nach Anspruch 3, **dadurch gekennzeichnet, dass** die einzelnen Schienenmanipulationsvorrichtungen (28, 30, 32, 34) als Paternoster ausgebildet sind, wobei zwei zueinander beabstandete umlaufende Zugmittel (35) ausgebildet sind und die einzelnen Speicherschienen (27, 29, 31, 33) jeweils an ihren Längsenden (36) mit den Zugmitteln (35) gekoppelt sind.

5. Abkantpresse nach Anspruch 4, **dadurch gekennzeichnet, dass** die einzelnen Speicherschienen (27, 29, 31, 33) mittels einer Gelenkverbindung (37) mit den Zugmitteln (35) gekoppelt sind, und die Speicherschienen (27, 29, 31, 33) derart an die Zugmittel (35) gekoppelt sind, dass die Speicherschienen (27, 29, 31, 33) bezüglich deren Oberseite (38) und Unterseite (39) aufgrund der Schwerkraft immer gleich ausgerichtet bleiben.

6. Abkantpresse nach einem der vorhergehenden Ansprüche, **dadurch gekennzeichnet, dass** der Manipulationskopf (16) seitlich der Werkzeugaufnahmen (5) angeordnet ist und mittels einer Führungsschiene (17) in horizontaler Verschieberichtung (14) entlang der Werkzeugaufnahme (5) verschiebbar gelagert ist, wobei sich die Führungsschiene (17) von der Werkzeugaufnahme (5) bis zumindest in den Vorrüstspeicher (24) des Werkzeugspeichers (23) erstreckt.

7. Abkantpresse nach einem der vorhergehenden Ansprüche, **dadurch gekennzeichnet, dass** sich die Führungsschiene (17) über die gesamte Länge (21) der Werkzeugaufnahmen (5) und sowohl über den Vorrüstspeicher (24) als auch den Hauptspeicher (25) des Werkzeugspeichers (23) erstreckt.

8. Verfahren zum Wechseln von Biegewerkzeugen (6) an einer Abkantpresse (2), insbesondere an einer Abkantpresse (2) nach einem der vorhergehenden Ansprüche, **dadurch gekennzeichnet, dass** das Verfahren die folgenden Verfahrensschritte umfasst:
- Vorbereiten eines Wechsels der Biegewerkzeuge (6), wobei die für den nächsten Biegevorgang benötigten Biegewerkzeuge (6) in der benötigten Reihenfolge mittels einer Werkzeugwechselvorrichtung (13) von einer Speicherschiene (31, 33) eines Hauptspeichers (25) eines Werkzeugspeichers (23) in eine Speicherschiene (27, 29) eines Vorrüstspeichers (24) des Werkzeugspeichers (23) verschoben werden, wobei die Werkzeugwechselvorrichtung (13) einen Manipulationskopf (16) umfasst, welcher zur wahlweisen Kopplung mit einem der Biegewerkzeuge (6) ausgebildet ist, um dieses in horizontaler Verschieberichtung (14) entlang der Werkzeugaufnahme (5) verschieben zu können und wobei der Manipulationskopf (16) einen Mitnehmerdorn (18) aufweist, welcher zum Eingriff in eines der Biegewerkzeuge (6) ausgebildet ist, wobei das Biegewerkzeug (6) eine Ausnehmung (20) aufweist, in welche der Mitnehmerdorn (18) einschiebbar ist, und dass der Mitnehmerdorn (18) mit einem Aktor (19) gekoppelt ist, mittels welchem Aktor (19) der Mitnehmerdorn (18) in die Ausnehmung (20) des Biegewerkzeuges (6) einschiebbar ist;
- Durchführen des Werkzeugwechsels, wobei Biegewerkzeuge (6), welche in einer an Pressbalken (4, 7) angeordneten Werkzeugaufnahme (5) aufgenommen sind, mittels der Werkzeugwechselvorrichtung (13) von der Werkzeugaufnahme (5) in eine der freien Speicherschienen (27, 29) des Vorrüstspeichers (24) verschoben werden und wobei die in der Speicherschiene (27, 29) des Vorrüstspeichers (24) vorbereiteten Biegewerkzeuge (6) mittels der Werkzeugwechselvorrichtung (13) von der Speicherschiene (27, 29) des Vorrüstspeichers (24) in die Werkzeugaufnahme (5) verschoben werden;
- Nachbereiten des Werkzeugwechsels, wobei die aus der Werkzeugaufnahme (5) in die Speicherschiene (27, 29) des Vorrüstspeichers (24) verschobenen Biegewerkzeuge (6) optional von der Speicherschiene (27, 29) des Vorrüstspeichers (24) in eine der Speicherschienen (31, 33) des Hauptspeichers (25) verschoben werden.

## Claims

1. A press brake (2) for bending sheet metals (3), the press brake (2) comprising:
a first fixed press beam (4), as well as a second press beam (7) displaceable relative thereto;
tool holders (5) for holding bending tools (6) arranged and/or formed on the press beams (4, 7);
a tool storage (23) designed for storing bending tools (6) that are not being used;
a tool-changing device (13) formed for displacing the bending tools (6) between the tool holder (5) and the tool storage (23),
wherein
the tool storage (23) has a set-up storage (24) and a main storage (25), wherein the set-up storage (24) is arranged on an end face (26) of the press beams (4, 7), directly following them, and the main storage (25) is arranged following the set-up storage (24), and wherein the set-up storage (24) and the main storage (25) are each formed for holding bending tools (6), wherein the tool-changing device (13) comprises a manipulation head (16) which is formed for the selective coupling with one of the bending tools (6), in order to be able to displace it in the horizontal direction of displacement (14) along the tool holder (5), **characterized in that** the manipulation head (16) has a drive arbor (18) which is formed for engaging with one of the bending tools (6), wherein the bending tool (6) has a recess (20) in which the drive arbor (18) can be inserted, and that the drive arbor (18) is coupled with an actuator (19), by means of which actuator (19) the drive arbor (18) can be inserted into the recess (20) of the bending tool (6).

2. The press brake according to claim 1, **characterized in that** the set-up storage (24) has at least two first storage rails (27) for holding a bending tool (6), which first storage rails (27) can be positioned in extension of the tool holder (5) of the first press beam (4), and at least two second storage rails (29) for holding a bending tool (6), which second storage rails (29) can be positioned in extension of the tool holder (5) of the second press beam (7), and wherein the main storage (25) has at least two first storage rails (31) for holding a bending tool (6), which first storage rails (31) of the main storage (25) can be brought in extension of the first storage rails (27) of the set-up storage (24), and wherein the main storage (25) has at least two second storage rails (33) for holding a bending tool (6), which second storage rails (33) of the main storage (25) can be brought into extension of the second storage rails (29) of the set-up storage (24).

3. The press brake according to claim 2, **characterized in that** the first storage rails (27) of the set-up storage (24) are arranged on a first rail manipulation device (28), and that the second storage rails (29) of the set-up storage (24) are arranged on a second rail manipulation device (30), and that the first storage rails (31) of the main storage (25) are arranged on a first rail manipulation device (32), and that the second storage rails (33) of the main storage (25) are arranged on a second rail manipulation device (34).

4. The press brake according to claim 3, **characterized in that** the individual rail manipulation devices (28, 30, 32, 34) are formed as paternosters, wherein two circumferential traction means (35), that are spaced apart from one another, are formed, and the individual storage rails (27, 29, 31, 33) are coupled, on their respective longitudinal end (36), with the traction means (35).

5. The press brake according to claim 4, **characterized in that** the individual storage rails (27, 29, 31, 33) are coupled with the traction means (35) by means of a hinged connection (37), and the storage rails (27, 29, 31, 33) are coupled on the traction means (35) such that the storage rails (27, 29, 31, 33), due to gravity, always remain in the same orientation with respect to their upper side (38) and bottom side (39).

6. The press brake according to one of the preceding claims, **characterized in that** the manipulation head (16) is arranged laterally to the tool holders (5) and is mounted to be displaceable in the horizontal direction of displacement (14) along the tool holder (5) by means of a guide rail (17), wherein the guide rail (17) extends from the tool holder (5) at least into the set-up storage (24) of the tool storage (23).

7. The press brake according to one of the preceding claims, **characterized in that** the guide rail (17) extends over the entire length (21) of the tool holders (5) and both over the set-up storage (24) and the main storage (25) of the tool storage (23).

8. A method for changing bending tools (6) on a press brake (2), in particular on a press brake (2) according to one of the preceding claims, **characterized in that** the method comprises the following method steps:
- preparing a change of the bending tools (6), wherein the bending tools (6) required for the next bending operation are displaced from a storage rail (31, 33) of a main storage (25) of a tool storage (23) into a storage rail (27, 29) of a set-up storage (24) of the tool storage (23) in the required order by means of a tool-changing device (13), wherein the tool-changing device (13) comprises a manipulation head (16), which is formed for being selectively coupled with a bending tool (6), in order to displace it in the horizontal direction of displacement (14) along the tool holder (5), and wherein the manipulation head (16) has a drive arbor (18) which is formed for engaging with one of the bending tools (6), wherein the bending tool (6) has a recess (20), in which the drive arbor (18) can be inserted, and that the drive arbor (18) is coupled with an actuator (19), by means of actuator (19) the drive arbor (18) can be inserted into the recess (20) of the bending tool (6);
- performing the tool change, wherein bending tools (6), which are held in a tool holder (5) arranged on press beams (4, 7), are displaced from the tool holder (5) into one of the free storage rails (27, 29) of the set-up storage (24) by means of the tool-changing device (13), and wherein the bending tools (6) prepared in the storage rail (27, 29) of the set-up storage (24) are displaced from the storage rail (27, 29) of the set-up storage (24) into the tool holder (5) by means of the tool-changing device (13);
- following up on the tool change, wherein the bending tools (6) displaced from the tool holder (5) into the storage rail (27, 29) of the set-up storage (24) are optionally displaced from the storage rail (27, 29) of the set-up storage (24) into one of the storage rails (31, 33) of the main storage (25).

## Revendications

1. Presse plieuse (2) pour le pliage de tôles (3), la presse plieuse (2) comprenant :
une première barre de pression fixe (4) ainsi que une deuxième barre de presse (7) coulissant par rapport à celle-ci ;
des logements d'outils (5), disposés resp. réalisé sur la barre de presse (4, 7), pour le logement d'outils de pliage (6) ;
un magasin d'outils (23) pour le stockage d'outils de pliage (6) non utilisés ;
un dispositif de changement d'outil (13) qui est conçu pour le coulissement des outils de pliage (6) entre le logement d'outils (5) et le magasin d'outils (23),
dans laquelle
le magasin d'outils (23) comprend un magasin de pré-équipement (24) et un magasin principal (25), dans lequel le magasin de pré-équipement (24) est disposé sur une face frontale (26) des barres de pression (4, 7) immédiatement après celles-ci, et le magasin principal (25) est disposé immédiatement après le magasin de pré-équipement (24) et dans laquelle le magasin de pré-équipement (24) et le magasin principal (25) sont conçus chacun pour le logement d'outils de pliage (6), dans laquelle le dispositif de changement d'outil (13) comprend une tête de manipulation (16) qui est conçue pour le couplage sélectif avec un des outils de pliage (6), afin de pouvoir faire coulisser celui-ci dans la direction de coulissement horizontale (14) le long du logement d'outil (5), **caractérisé en ce que** la tête de manipulation (16) comprend un mandrin d'entraînement (18) qui est conçu pour s'emboîter dans un des outils de pliage (6), dans laquelle l'outil de pliage (6) comprend un évidement (20) dans lequel le mandrin d'entraînement (18) peut être inséré et **en ce que** le mandrin d'entraînement (18) est couplé avec un actionneur (19) le mandrin d'entraînement (18) pouvant être inséré, au moyen de l'actionneur (19), dans l'évidement (20) de l'outil de pliage (6).

2. Presse plieuse selon la revendication 1, **caractérisé en ce que** le magasin de pré-équipement (24) comprend au moins deux premiers rails de magasin (27) pour le logement d'un outil de pliage (6), ces premiers rails de magasin (27) pouvant être positionnés dans le prolongement du logement d'outil (5) de la première barre de presse (4) et comprend au moins au moins deux deuxièmes rails de magasin (29), des deuxièmes rails de magasin (29) pouvant être positionnés dans le prolongement du logement d'outil (5) de la deuxième barre de presse (7) et dans laquelle le magasin principal (25) comprend au moins deux premiers rails de magasin (31) pour le logement d'un outil de pliage (6), ces premiers rails de magasin (31) du magasin principal (25) pouvant être amenés dans le prolongement des premiers rails de magasin (27) du magasin de pré-équipement (24) et dans laquelle le magasin principal (25) comprend au moins deux deuxièmes rails de magasin (33) pour le logement d'un outil de pliage (6), ces deuxièmes rails de magasin (33) du magasin principal (25) pouvant être amenés dans le prolongement des deuxièmes rails de magasin (29) du magasin de pré-équipement (24).

3. Presse plieuse selon la revendication 2, **caractérisée en ce que** les premiers rails de magasin (27) du magasin de pré-équipement (24) sont disposés sur un premier dispositif de manipulation de rails (28) et **en ce que** les deuxièmes rails de magasin (29) du magasin de pré-équipement (24) sont disposés sur un deuxième dispositif de manipulation de rail (30) et **en ce que** les premiers rails de magasin (31) du magasin principal (25) sont disposés sur un premier dispositif de manipulation de rails (32) et **en ce que** les deuxièmes rails de magasin (33) du magasin principal (25) sont disposés sur un deuxième dispositif de manipulation des rails (34).

4. Presse plieuse selon la revendication 3, **caractérisée en ce que** les différents dispositifs de manipulation de rails (28, 30, 32, 34) sont conçus comme des paternosters, dans laquelle deux moyens de traction circulaires distants entre eux (35) sont réalisés et les différents rails de magasins (27, 29, 31, 33) sont couplés chacun à leurs extrémités longitudinales (36) avec les moyens de traction (35).

5. Presse plieuse selon la revendication 4, **caractérisée en ce que** les différents rails de magasins (27, 29, 31, 33) sont couplés, au moyen d'une liaison articulée (37), avec les moyens de pression (35) et les rails de magasins (27, 29, 31, 33) sont couplés aux moyens de traction (35) de façon à ce que les rails de magasins (27, 29, 31, 33) restent toujours orientés de la même façon en ce qui concerne leur côté supérieur (38) et leur côté inférieur (39), du fait de la gravité.

6. Presse plieuse selon l'une des revendications précédentes, **caractérisée en ce que** la tête de manipulation (16) est disposée latéralement sur les logements d'outils (5) et est montée de manière coulissante au moyen d'un rail de guidage (17) dans la direction de coulissement horizontale (14) le long du logement d'outil (5), dans laquelle le rail de guidage (17) s'étend du logement d'outil (5) jusqu'au moins dans le magasin de pré-équipement (24) du magasin d'outil (23).

7. Presse plieuse selon l'une des revendications précédentes, **caractérisée en ce que** le rail de guidage (17) s'étend sur toute la longueur (21) des logements d'outils (5) s'étend aussi bien au-dessus du magasin de pré-équipement (24) que du magasin principal (25) du magasin d'outil (23).

8. Procédé de changement d'outils de pliage (6) sur une presse plieuse (2), plus particulièrement sur une presse plieuse (2) selon l'une des revendications précédentes, **caractérisé en ce que** le procédé comprend les étapes suivantes :
- préparation d'un changement d'outils de pliage (6), dans lequel les outils de pliage (6) nécessaires pour le prochain processus de pliage sont coulissés dans l'ordre nécessaire au moyen d'un dispositif de changement d'outil (13) d'un rail de magasin (31, 33) d'un magasin principal (25) d'un magasin d'outils (23) vers un rail de magasin (27, 29) d'un magasin de pré-équipement (24) du magasin d'outils (23), dans laquelle le dispositif de changement d'outil (13) comprend une tête de manipulation (16) qui est conçue pour le couplage sélectif avec un des outils de pliage (6), afin de pouvoir coulisser celui-ci dans la direction de coulissement horizontale (14) le long du logement d'outil (5) et dans laquelle la tête de manipulation (16) comprend un mandrin d'entraînement (18) qui est conçu pour s'emboîter dans un des outils de pliage (6), dans laquelle l'outil de pliage (6) comprend un évidement (20) dans lequel le mandrin d'entraînement (18) peut être inséré et **en ce que** le mandrin d'entraînement (18) est couplé avec un actionneur (19), le mandrin d'entraînement (18) pouvant être inséré dans l'évidement (20) de l'outil de pliage (6) au moyen de l'actionneur (19) ;
- réalisation du changement d'outil, dans lequel les outils de pliage (6), qui sont logés dans un logement d'outil (5) disposé sur la barre de presse (4, 7), sont coulissés au moyen du dispositif de changement d'outil (13) du logement d'outil (5) vers un des rails de magasins (27, 29) libres du magasin de pré-équipement (24) et dans lequel les outils de pliage (6) préparés dans le rail de magasin (27, 29) du magasin de pré-équipement (24) sont coulissés au moyen du dispositif de changement d'outil (13) du rail de magasin (27, 29) du magasin de pré-équipement (24) vers le logement d'outil (5) ;
- suivi du changement d'outil, dans lequel les outils de pliage (6) coulissés du logement d'outil (5) vers le rail de magasin (27, 29) du magasin de pré-équipement (24) sont coulissés, en option, du rail de magasin (27, 29) du magasin de pré-équipement (24) vers un des rails de magasin (31, 33) du magasin principal (25).
